# EUROPEAN PATENT APPLICATION

(11) **EP 4 645 280 A1**
(43) Date of publication of application: **05.11.2025**
(21) Application number: 24173047.2
(22) Date of filing: 29.04.2024
(51) Int. Cl.: G08G 1/14, G06V 20/58

(54) **PARKING LOCATION REMINDER**

(71) Applicant: Vestel Elektronik Sanayi ve Ticaret A.S., 45030 Manisa (TR)
(72) Inventor: Aygül, Mehmet Ali, 45030 Manisa (TR); Kirisken, Barbaros, 45030 Manisa (TR)
(74) Representative: Hoffmann Eitle

(57) **Abstract**

A device for indicating a parking location of a vehicle, comprising: a detection module configured to detect an occurrence of a parking-related event for the vehicle; a controller configured to obtain, from one or more video signals provided by at least one camera coupled to the vehicle, location information that indicates a parking location of the vehicle; and a notification module configured to trigger a notification to a user, upon the detection of the parking-related event, the notification including the location information. A method and computer program are also provided.

## Description

### Technical field

The present invention relates to assisting users determining the location of a parked vehicle, and in particular, to a device, a system, a method and a computer program for indicating a location of a parked vehicle.

### Background

Users parking a vehicle (e.g. a car, truck, motorbike, etc.) may not remember the specific location where it was parked, in particular in large or multistorey car parks. A possible option is to use the vehicle's global positioning system (GPS) or other navigational system (e.g. gyro sensors, odometry systems, etc.) to locate the parked vehicle. However, as these systems rely on a connection to satellites, their accuracy is poor in closed spaces such as underground car parks, and this type of systems only provide a geographic coordinate, which does not assist the user determining which floor of a multistorey car park the vehicle is located.

While a user having parked their vehicle could use a mobile device (e.g. mobile phone, tablet etc.) to take a picture or record a video as a reminder of the location of the parked vehicle, it is inconvenient to the user to remember to do so each time.

Although the mobile device of the user could be connected with the vehicle cameras, and image and/or videos could be transmitted to the mobile device while the vehicle moves, until the connection is lost (indicating the vehicle is parked and turned off), this would cause the unnecessary transmission of data to the mobile device, and negatively affects the battery and storage space on the mobile device creating more inconvenience for the user.

### Summary

There is therefore a need for an improved and convenient way to assist users determine the location of a parked vehicle, and in particular in settings where GPS information is insufficient to accurately indicate a location where a vehicle is parked, such as indoor, underground or multi-storey parks.

According to a first example aspect herein, there is provided a device for indicating a parking location of a vehicle, comprising: a detection module configured to detect an occurrence of a parking-related event for the vehicle; a controller configured to obtain, from one or more video signals provided by at least one camera coupled to the vehicle, location information that indicates a parking location of the vehicle; and a notification module configured to trigger a notification to a user, upon the detection of the parking-related event, the notification including the location information.

The device, and in particular the detection module and/or the controller, may be connected to the vehicle's electronic systems (e.g. systems sharing data such as the navigation system, the engine management system, etc.) for example via a data bus (e.g. via an ODB port of the vehicle), to obtain information about the vehicle and detect when a parking-related event occurs (e.g. an event indicating that the vehicle is about to be parked).

This triggers the device to prepare a notification that would indicate to the user a location of where the vehicle is parked.

Nowadays, vehicles have one or more video cameras mounted in or on to capture the environment of the vehicle according to different angles. Some of these cameras may be built-in for a specific purpose, for example as part of a parking assistance system (with an image being displayed when the user is parking the vehicle, to assist the user view any potential obstacles near the parking spot), as part of a navigation system (to identify street signs indicating a speed limit or another condition related to the road on which the vehicle is being driven). Cameras may also be mounted in or on the vehicle afterwards, for example as a dash-cam used to capture the traffic around the vehicle as it is being driven. The video signals from any of these types of cameras would, when capturing the environment of the vehicle being parked, capture location information that is posted on a wall, column, on the floor etc., in order to assist users know a location, such as a floor number, a sector defining a part of a car park, a row or parking spot number, etc. A user parking their vehicle may visually note this location information and memorise it, as a reminder of the parking location of the vehicle. However, the user may forget or not notice the location information. Thus, the notification to the user, which includes the location information, serves as a reminder of the parking location of the vehicle.

The detection module may also receive the video signals and detect the parking-related event based at least in part on visual information contained in the video signals and/or the detection module may comprise other means to independently detect such parking-related event.

With the device of the first exemplary aspect, by detecting the occurrence of the parking-related event, the device can automatically (i.e. without any prompt from the user) determine when to start processing video signals from camera(s) to obtain the location information and/or to notify this to the user. Accordingly, any unnecessarily storage, processing or transmission of video signals from the cameras and/or to the user (i.e. to a mobile device of the user) can be avoided, thus improving battery usage of the device and/or of the mobile device of the user.

Preferably, triggering the notification comprises transmitting the notification to a mobile device of the user with the location information. The transmission may be done via any suitable communication link.

Preferably, the controller is configured to process the one or more video signals to detect visual information showing a location, wherein the notification indicates the location shown by the visual information.

The controller may perform any type of suitable video and/or image processing to detect visual information that shows a location in the proximity of the vehicle, which can be used as a reference to the location of the vehicle itself.

Accordingly, the user receiving the notification can easily note the location that is indicated, to determine the parking location of the vehicle.

Preferably, the visual information is determined from video signals captured over a time period that is at least in part after a time at which the detected parking-related event occurred.

That is, when detecting a parking-related event, the detection module may be configured to detect a time at which the parking-related event occurred (e.g. a time instant, for example a time instant at which the parking-related event is deemed to have started). The visual information may be obtained from a time period starting at the time at which the detected parking-related event occurred, or it may start before (e.g. a predetermined duration before the occurrence of the parking-related event) and end after the occurrence of the parking-related event.

This is because, as the vehicle is driven through a parking area (e.g. a multi-storey car park), the cameras may pick up visual information corresponding to the floors, sectors and/or parking spots by which the vehicle pass.

Thus, by ensuring that the visual information is determined from a time period that is at least partially after the occurrence of the parking-related event, The controller may detect visual information that is closer to the actual parking location of the vehicle (in case the video signals include visual information captured at various time instants), i.e. more accurate visual information.

Preferably, the notification includes visual data comprising the visual information, the visual data is based on a number of images from the one or more video signals captured over a time period corresponding to the parking-related event.

The number of images may be one or a series of images (e.g. video frames) that are included in the video signal(s), and the visual data may be provided in a video format (e.g. a video clip), or as still images.

Preferably, the (number of) images are captured over a time period having at most a predetermined duration.

Preferably, the predetermined duration is one minute.

That is to say, the visual data provided to the user shows a time period corresponding to the time at which parking-related event is deemed to have occurred, for example, one minute. In other words, the visual data in the notification corresponds to the video signal(s) captured during that time period of one minute or less.

Limiting the amount of visual data provided improves user convenience by ensuring the user need not sift through large amount of visual data to identify the parking location of the vehicle, and limits the requirements for the transmission of the visual data (in terms of time, bandwidth, etc.) and/or the for the storage and processing of the visual data on the device and on a user device to which the visual data is transmitted.

The visual data can therefore correspond to the time period during which the vehicle starts being parked, and thus the time period during which the camera(s) is/are more likely to capture the visual information nearest the location where the vehicle is being parked.

More preferably, the predetermined duration is thirty seconds.

When the visual data is provided in a video format, the provided video may have a duration that is shorter than the time period during which it was captured, for example by including only a subset of frames (e.g. one every N frames, where N is an integer number equal to or greater than 2) and/or by reducing the interval between consecutive frames (effectively increasing the frame rate).

Accordingly, the user may view the entire video with the visual information in a shorter time, thus improving user convenience.

Preferably, at least one of the number of images is captured after a time at which the detected parking-related event is deemed to have occurred.

Accordingly, time period starts at or before the time at which the detected parking-related event is deemed to have occurred, and ends after that time, and the visual information can be ensured to be the closest to the actual parking location of the vehicle.

Preferably, when the controller processes each received video signal to detect visual information indicating a location, the notification only includes visual data corresponding to video signals in which any visual information is detected.

Accordingly, the transmission of the notification may be more efficient, and the user may access the visual information more conveniently.

Preferably, the controller is configured to obtain the visual data by reducing a size of the one or more video signals.

By reducing the size of the video signal(s), the device can reduce the technical requirements for the transmission, processing and storage of the visual data, and can reduce the provision of visual data that is not needed for the user to determine the parking location of the vehicle.

Preferably, the controller is configured to reduce the size of the one or more video signals by performing at least one of: compressing the one or more video signals, reducing a resolution of frames of the one or more video signals, reducing a frame rate of the one or more video signals, and extracting a portion of each image comprising the visual information.

Compressing may be understood in the context of the present disclosure to be any suitable transformation of the video format into another format requiring a lower amount of data (e.g. measured as bit per frame).

The extraction of the portion may be considered as a removal (e.g. crop) of areas of the image outside the extracted portion.

The controller may perform any combination of the video compression, resolution and/or frame rate reduction, and extraction of portion of image whilst avoiding that a quality of the visual information drops below a threshold that would make it difficult for the user to understand the visual information in the visual data.

Preferably, the controller is configured to generate text information from the visual information, and the notification includes the text information.

The controller may perform any suitable image and/or video processing to identify text (e.g. alphanumeric characters) present on the video signal(s), such as optical character and/or sign recognition.

Preferably, the notification module is configured to transmit the text information to the user in a text-based format.

The identified text information may be transmitted in the notification via any suitable text-based format, preferably via one or more of a text message (SMS, MMS, instant message, etc.), an email, and a notification to an application executed on the mobile device of the user.

Although text-based format is used to indicate that information can be transmitted as text, this is not limited to a text-only format. For example, emails, text messages and app notifications may also include visual data (e.g. still image(s) and/or video(s)).

Preferably, the notification including the text information is transmitted via a text-only format. Accordingly, the requirements for the transmission and processing of the notification may be reduced, thus allowing more types of mobile devices to receive it. Additionally, the user can quickly determine the parking location of the vehicle from the received text information.

Preferably, the controller may be configured to perform the image and/or video processing to identify text information (e.g. alphanumeric characters) indicating a parking location on the video signals, and when no text information is identified, the controller may process the one or more video signals to generate the visual data comprising the visual information, as explained above.

Accordingly, the device would, when possible, only transmit a text information to indicate the parking location, and transmit the visual data (requiring more resources for transmission and processing) only when the text information is not identifiable. The user receiving the notification may then determine, using the visual data, where the vehicle is parked.

In other words, preferably, the controller is configured to determine a format of the notification, based on a type of location information that is identifiable from the one or more video signals. A type of location information includes a visual information, a text information, and a contextual location indication (e.g. a specific colour or pattern associated with a specific sector or floor in a parking area).

Preferably, the notification module is configured to trigger the notification to the user upon reception of a request from the user for the parking location of the vehicle.

Accordingly, whilst the controller may obtain the location information each time the vehicle is parked, the user may selectively obtain the notification when necessary only, thus avoiding needlessly transmitting notifications. Additionally, this allows the user to obtain the notification only when needed, which may be helpful as it would avoid the user having to search for the notification, especially when the vehicle is left parked in a location for an extended period of time.

Preferably, the controller is configured to generate, upon detection of the parking-related event, one or more control signals for causing the at least one camera to record the one or more video signals.

Accordingly, the cameras may be left in a stand-by or a reduced power consumption more until the parking-related event is detected, thus reducing any battery usage and avoiding unnecessary video signal(s) from being produced and processed.

Preferably, the controller is configured to store video data from the one or more video signals corresponding to at least a most recent time period.

Accordingly, the controller may ensure access to the time period during which the vehicle was parked if necessary. The controller may store the video data in a memory of the device or coupled to the device, which can be a volatile or non-volatile memory.

Preferably, the controller may interrupt the storage of video data upon detecting that the vehicle is immobile (e.g. parked or temporarily stopped). The camera(s) would likely be continuously capturing the same images, and thus the same visual information, while the vehicle is not moving. This would reduce the storage of video data with the same visual information.

Preferably, the controller is configured to process each received video signal, and only store the video signal in which any location information is detected.

Preferably, the controller 14 may be configured to only store portions of the video signals in which the location information is detected. The controller may store only frames/images including visual information, and/or only portion of frames/images including visual information.

Accordingly, usage of the memory may be improved.

Preferably, the controller is configured to overwrite stored video data corresponding to an earlier time period with new video data from the one or more video signals corresponding to a more recent time period.

Accordingly, the amount of memory required to store the video data can be predetermined and kept constant.

Preferably, the controller is configured to protect, upon detection of a parking-related event, stored video data captured at a time at which the parking-related event is deemed to have occurred.

Accordingly, it can be ensured that the video data corresponding to the detected parking-related event is kept available to obtain location information, transmit visual data and/or text information, etc.

Preferably, the controller is configured to store the video data upon detection of the parking-related event.

In other words, the controller may be configured not to store video data (e.g. not to store in a permanent and/or non-volatile memory) until a parking-related event is detected.

Accordingly, any video data that does not relate to a parking-related event (and thus would not include any useful visual information to identify the parking location of the vehicle) can be discarded without requiring storage processing or other memory related process.

Preferably, the parking-related event indicates that a vehicle has been parked, that a manoeuvre to park the vehicle has initiated, or that the vehicle entered a parking area.

For example, the engine of the vehicle being turned off, the parking brake being applied etc. can be used to determine that the vehicle has been parked.

Similarly, the vehicle may have parking sensors that are configured to start operating when the vehicle is driven slowly (in particular in reverse gear), or a turn in a specific way, to alert the user of any obstacles while parking. The start of operation of the parking sensors may be used as an indication that a manoeuvre to park the vehicle has initiated.

The vehicle's navigation system may include information on the location of parking areas (e.g. car parks, garages, etc.). The detection by the vehicle's navigation system that the vehicle entered one of these areas may be used as an indication that the corresponding parking-related event occurred.

During the manoeuvre to park the vehicle, the capturing direction of the camera(s) would change as the vehicle turns into the parking spot, thus capturing a larger portion of the environment. This makes it more likely that visual information that is near the parking location of the vehicle is captured in that video signal. In contrast, any new visual information is less likely to be captured by a forward or backward facing camera when the vehicle moves along the same direction, because each camera remains in a fixed capturing direction.

Preferably, the detection module is configured to detect a sequence of parking-related events, each occurring at a corresponding timing, and the controller is configured to obtain, for at least a subset of the sequence of parking-related events, location information based on images from the one or more video signals captured around the corresponding timing.

While driving the vehicle to the parking location (e.g. the specific parking spot chosen by the user), the vehicle is likely to pass by a number of location information. Different pieces of location information can be obtained each time a parking-related event is detected. For example, when the vehicle enters a parking area, the camera(s) may capture information identifying (e.g. a name of) the parking area. Then when initiating a manoeuvre to park, the camera(s) may capture information identifying a row or sector, based on a sign that is displayed in the row of parking spots, near the chosen parking spot. Then, once the vehicle is parked, the camera(s) may capture information identifying the chose parking spot (e.g. a number displayed on the wall). Thus, by obtaining location information for at least a subset of the parking-related events, a more complete location information can be provided to the user.

For example, the detection module may detect a first parking-related event at a timing t1, and a second parking-related event at a timing t2. The controller may obtain location information for the first parking-related event based on images captured at timing t1 (or within a 5-second period before or a 5-second period after timing t1). Similarly, the controller may obtain location information for the first parking-related event based on images captured at timing t1 (or within specific period before and/or after).

Preferably, the controller is configured to prioritise location information obtained for the parking-related event occurring later in the sequence when determining the location information to be included in the notification.

As the vehicle is driven in the parking area, it may pass near multiple parking spots (or sectors/rows), and the camera(s) may capture information identifying each of these. However, these would not correspond to the parking location that is actually used. Thus, the controller can prioritise location information obtained for a parking-related event occurring later in a sequence.

As a result of the prioritising, location information for any parking-related event occurring earlier in the sequence is not included in the notification, or it may be included only in case that no location information is obtained for any parking-related event occurring later. Thus, the location information provided to the user is more likely to be accurate information.

Preferably, the detection module may be configured to detect any of a number of types of parking-related event. Each type of parking-related event may be detected based on respective predetermined criteria and may have an associated accuracy value indicating an estimated maximum distance that the vehicle may travel between the location where the parking-related event is detected and the final parking location of the vehicle.

For example, the vehicle entering a parking area may be a first type of parking-related event associated with a lowest accuracy value (because the vehicle may drive a large distance within the parking area until it actually parks). Detecting that the vehicle's altitude has changed by a whilst remaining in the parking area may be a second type of parking-related event associated with a second lowest accuracy value (because it indicates that a new floor was reached, but not where the vehicle will be parked on that floor). The start of a manoeuvre to park may be a third type of parking-related event associated with a medium accuracy value (because it is estimated that the vehicle will travel at most about 10 meters from the start of the manoeuvre), and the vehicle being parked may be a fourth type of parking-related event associated with a highest accuracy value.

Preferably, the controller is configured to prioritise location information obtained for a first type of parking-related event associated with a higher accuracy value over location information obtained for a second type of parking-related event associated with a lower accuracy value.

Preferably, the one or more video signals include images captured in a visible wavelength, preferably as RGB (Red, Green, Blue) images.

Preferably, the at least one camera comprises at least one of: a front camera mountable towards a front section of the vehicle and configured to capture images of the environment in the front of the vehicle, a back camera mountable towards a back section of the vehicle and configured to capture images of the environment behind the vehicle, one or more side cameras each mountable on a side of the vehicle and configured to capture images of the environment on the side of the vehicle. Side cameras may be placed on one or both of the vehicle's sides.

According to a second example aspect herein, there is provided a method for indicating a location of a parked vehicle, comprising:
detecting an occurrence of a parking-related event for the vehicle;
obtaining, from one or more video signals that are provided by at least one camera coupled to the vehicle, location information that indicates a parking location of the vehicle; and
triggering a notification to a user, upon detection of the parking-related event, the notification including the location information.

It would be understood that, at least some of steps of the method may be implemented by a computer, i.e. as a computer-implemented method.

According to a third example aspect herein, there is provided a computer program comprising instructions which, when executed by at least one processor, cause the at least one processor to perform a method according to the second example aspect herein.

According to a fourth example aspect herein, there is provided a computer-readable medium storing thereon the computer program instructions according to the third example aspect herein.

According to a fifth example aspect herein, there is provided a system comprising the device according to the first example aspect herein, and the at least one camera. The system may be couplable to the vehicle.

Preferably, each of the at least one camera is mountable on the vehicle.

Preferably, the device is mountable in or on the vehicle.

Preferably, any (or all) of the at least one camera and the device are removably mountable on the vehicle.

### Brief description of the drawings

Embodiments of the present invention, which are presented for better understanding the inventive concepts, but which are not to be seen as limiting the invention, will now be described with reference to the figures in which:
Figure 1 shows a schematic diagram illustrating an example of a device for indicating a location of a parked vehicle in example embodiments;
Figure 2 shows processing operations performed by a device in a first example implementation;
Figures 3a, 3b, 3c and 3d show an example of a vehicle at different moments during a manoeuvre to park the vehicle at a location;
Figure 4 shows processing operations performed by a device in a second example implementation;
Figure 5 shows a schematic diagram illustrating an example of a processing device that may be used to implement the device in example embodiments.
Figure 6 shows processing operations performed by the device and a user device in a specific example implementation where the user may request the location information;
Figures 7a to 7c show examples of image and/or video processing that may be performed by the controller on video signal(s);
Figure 8 shows a detailed example of the controller storing video data;
Figure 9a shows another detailed example of the controller storing video data;
Figure 9b shows a detailed example of the controller protecting stored video data;
Figure 10 shows an example of a system according to example embodiments;
Figure 11 shows processing operations performed by a device in a third example implementation;
Figure 12 shows processing operations performed by a device in a fourth example implementation.

### Detailed description

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

As used herein, devices (e.g. the device for indicating a location of a parked vehicle, cameras, a mobile device of the user, and data processing components of the system) may communicate with each other using suitable communication link, such as wireless communication link (for example a Wi-Fi or cellular telephone data link) or a wire, fibre-optic cable, data bus installed in the vehicle to exchange information, etc. Each communication link may not be permanent.

As used herein, the terms user would be understood to mean a user of the vehicle, and thus may correspond to the driver of the vehicle (or the person who will drive the vehicle out of the parking location), but it may be any other user trying to locate the parking position of the vehicle in a parking area.

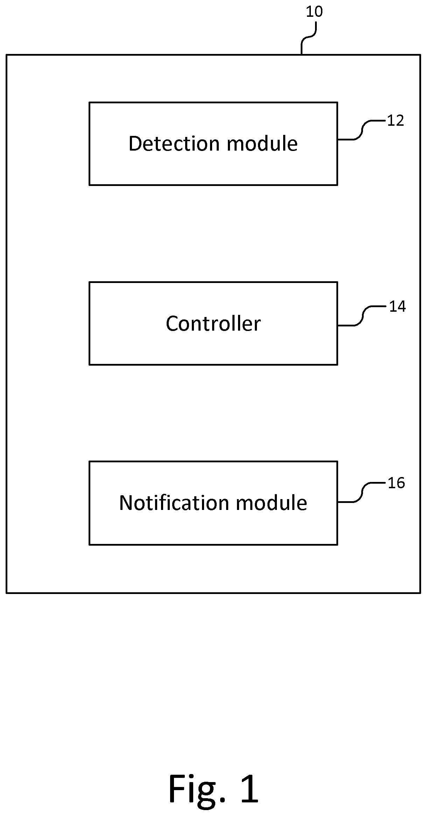

Figure 1 shows a schematic diagram illustrating an example of a device for indicating a location of a parked vehicle. The device 10 comprises a detection module 12, a controller 14 and a notification module 16. The device is mountable on or in the vehicle, which may be a car, a truck, a motorbike, or any suitable type of road vehicle.

The device 10 may be communicatively coupled to one or more video cameras that are mounted on the vehicle and set to capture the environment in the vicinity of the vehicle. Each camera may be built-in (e.g. for a specific purpose such as parking assistance, navigation assistance or danger/collision avoidance), or it may be a camera that is installed by the user, such as a dash cam. Each camera may be any suitable camera for detecting the environment.

If more than one camera is present, they may have the same or different image/video capturing characteristics (e.g. shutter speed, capturing angle, aperture, etc.) and each may be mounted to face different directions away from the vehicle (e.g. one camera may be mounted forward facing above the front windscreen, another may be facing backwards from the side mirrors to check a driver's blind spots, etc.). Preferably the camera(s) include at least one RGB camera.

When the user is driving the vehicle and decides to park the vehicle, the detection module 12 detects the occurrence of a parking-related event. As used herein, the parking-related event may be any suitable event that may be detected based on information collected via one or more sources related to the vehicle, and that indicates the vehicle is going to be parked.

For example, a parking-related event may be detected based at least in part on video signals from camera(s) on the vehicle. As a more specific example, the vehicle entering a car park may be detected, or the presence of indications that the vehicle is in a parking area, such as parallel lines on the floor indicating parking spots, may be detected from the video signals. As another example a parking-related event may be detected based at least in part on data from a navigation system, such as an indication that the vehicle has approached a user's desired destination. As yet another example, a vehicle's onboard computer may have a system to detect the start of a parking manoeuvre, for example to start the operation of parking sensors. Thus, the data from the vehicle's onboard computer or data bus used by the onboard computer may be used to detect the start of a parking manoeuvre.

For example, a navigation (e.g. GPS) system of the vehicle or on the user's mobile device, may indicate that a vehicle has entered a geographic area for parking. Detecting that the vehicle has entered a parking area is an example of a parking-related event.

As another example, vehicle sensors such as one or more gyro sensors of the vehicle, an odometry system of the vehicle, etc., may be used to detect that the vehicle is being or has parked.

It would be understood that various ways of detecting different types of parking-related event may be used by the detection module 12.

The controller 14 is communicatively coupled to the camera(s) on the vehicle, and receives the video signals from each camera, via any suitable communication link (e.g. dedicated link(s) or using existing link(s) such as a data bus installed in the vehicle).

In some examples, the controller 14 may be receiving a video signal from a single camera on the vehicle.

When the vehicle is about to be parked, the vehicle will likely pass near an indication of a location that would be used by the driver. Typically, parking areas are divided in sectors (e.g. one or more rows of parking spots). As used herein, the term sector should be understood to mean any subdivision of a parking area grouping a number of parking spots. Accordingly, a specific parking spot can be defined as a combination of the sector name and the parking spot number. For example, in multistorey car parks, each floor may be considered a sector.

Thus, the vehicle may pass near a sign indicating a sector, which will be captured by the video cameras. The information on the sign is an example of location information that indicates the location where the vehicle will be parked. Thus, this location information is obtained from the video signals, as will be explained in more details below.

The notification module 16 triggers a notification to a user once a parking-related event is detected. By triggering the notification, the notification module causes a transmission to another device (e.g. a mobile device or any other device the user may have access to when away from the vehicle). The transmission may be done via any suitable communication link, and may be done via transmission means in the device 10 or transmission means coupled to the device 10 (for example, transmission means in the vehicle itself).

Accordingly, when the user is away from the vehicle and wishes to be reminded of where the vehicle is parked, the user can receive the notification and can determine the parking location based on the location information in the notification.

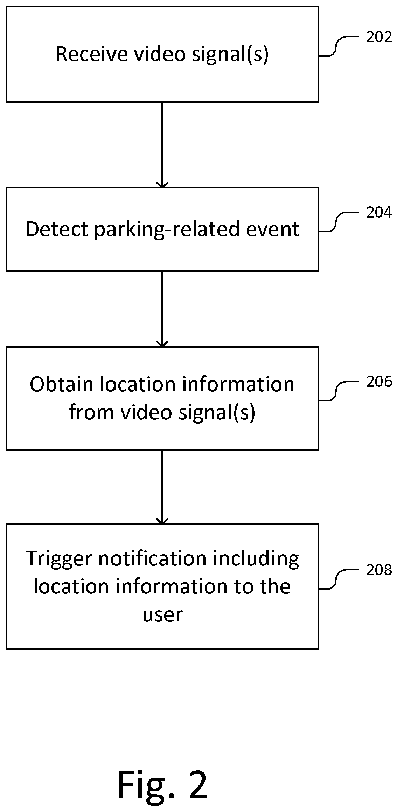

Referring now to Figure 2, processing operations performed by the device 10 in a first example implementation will be explained.

At step 202, the controller 14 starts receiving one or more video signals captured by the camera(s).

It would be understood that the video signal(s) may be received as a continuous stream of data or the cameras may each cache data and transmit multiple segments or chunks of video signal at once. Any suitable transmission of video signal may be used herein.

At step 204, the detection module 12 detects that a parking-related event occurred.

At step 206, the controller 14 obtains from the one or more video signals, a location information.

In the present implementation, the location information is obtained in the form of a short video clip, i.e. a portion of the video signal(s) that shows the location information. The short video clip may be, for example, a video clip of a minute or less; it may be for example a clip of 30 or 15 seconds.

In the present implementation, the controller 10 performs an image analysis on the images captured by the video cameras to identify any visual information (e.g. a text, symbols or other visually recognisable information) that indicates the parking location. For example, each sector/floor/row or even parking spot of a car park may be associated with a specific colour (e.g. by painting the corresponding walls in that colour), with a specific symbol, and/or with alphanumeric character(s). This location information in the video signal(s) is processed to be embedded in a notification to the user.

Specifically, the controller determines which images from the video signal(s) correspond to the time at which the detected parking-related event occurred (i.e. which images were captured around the time at which the detected parking-related event is deemed to have occurred). This may include images captured up to a predetermined period before the parking-related event occurred and/or a predetermined period after the parking-related event occurred. Accordingly, the controller 14 need not analyse all images in the video signals to identify the location information.

At step 208, the notification module 16 triggers the notification to the user by including the location information. The notification may also comprise other information, such as a date and time at which the vehicle was parked, etc. The notification may be provided to the user via text message, email, via a notification (e.g. push notification) to an application installed on a mobile device of the user, or any suitable means to transmit the notification that includes a video clip. In some examples, the device 10 may cause the video clip to be stored on a cloud location accessible remotely, and the notification may include a link (e.g. URL) to access the video clip, which the user may view by following the link in the notification.

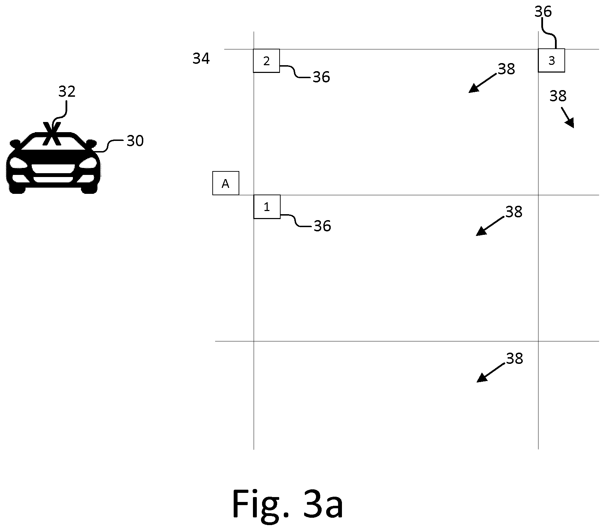

Referring now to Figures 3a to 3d, an example of a vehicle that is parking the vehicle at a location will be explained.

As shown on Figure 3a, a vehicle 30 (e.g. a car) having a camera 32 mounted towards the top of the front windscreen and facing forward, is about to park in a multistorey car park. In the example shown on Figure 3a, the vehicle 30 is on the top floor of the car park, in the sector 'A' (as indicated by the sign 34). The sector 'A' (which may correspond to a row of parking spots) includes a number of parking spots 38, each indicated with a corresponding sign 36.

It would be understood that the definition and nomenclature used in on Figure 3a is a non-limiting and purely illustrative example of location information which can be obtained and notified to the user. Car parks (or other types of parking areas) need not have a sign for each parking spot, sectors etc. In parking areas, the location information may also be provided in any other form visible to users, for example imprinted on the floor or a wall, or it may be implicit from the context (e.g. each floor or sector of a parking area may be identifiable from different colour/pattern on the walls and/or the floor).

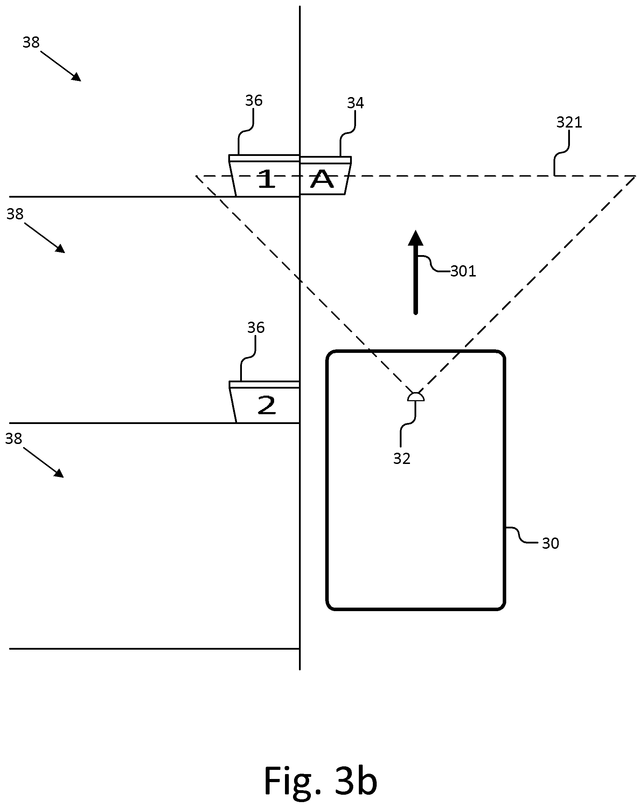

Figure 3b shows the same situation as figure 3a, but in a simplified form and from an elevated perspective to illustrate the capture of the location information.

As shown on Figure 3b, the camera 32 has a field of view depicted as 321. As the vehicle 30 moves along the direction shown by the arrow 301, the sign 34 and the sign 36 enter into the field of view 321 of the camera 32, and is thus captured on the video signal generated by the camera 32. Accordingly, the controller 14 can obtain visual information showing this location information (i.e. the information provided on the sign 36 and/or the sign 34).

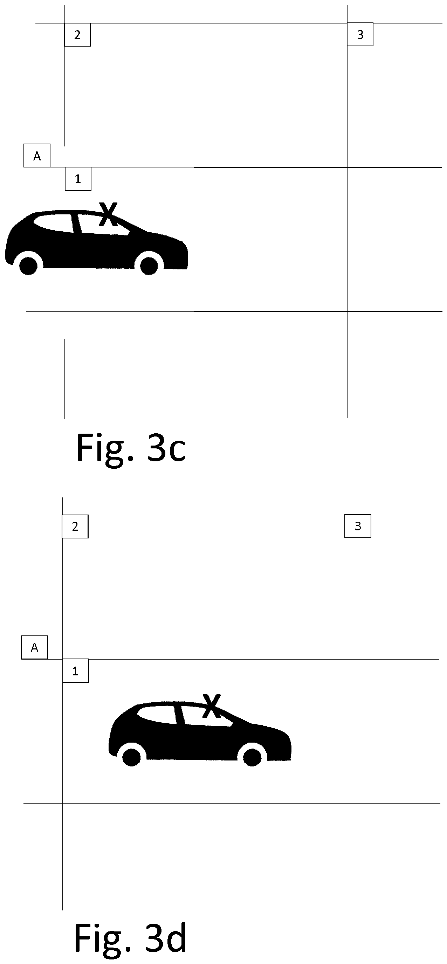

Referring now to figure 3c, the vehicle 30 has initiated a manoeuvre to enter into the parking spot 38 corresponding to the sign 34 indicating "1". By way of non-limiting example, the initiation of this manoeuvre is a parking-related event detected by the detection module 12, based on a reduced movement speed, and a rotation of the wheels, followed by the activation of the parking sensors. However, it would be understood that any other suitable way to detect such parking-related event may be used instead.

Referring now to figure 3d, the vehicle 30 is placed in the parking spot 30, the parking brake is applied and/or the ignition of the engine is turned off. The vehicle having parked is another non-limiting example of a parking-related event that may be detected by the detection module 12.

Any of these detected parking-related event may cause the controller 14 to obtain location information and/or the notification module 16 to trigger a notification to the user including the location information obtained from the captured video signal (e.g. the information provided on the signs 34 and 36).

Thus, the user may be informed that the vehicle 30 is parked on the top floor (e.g. floor 4), in the sector A, parking spot 1.

More generally, it would be understood that between the moment that the vehicle 30 enters the car park and the moment shown on figure 3d, the vehicle may pass by a number of location information, e.g. signs indicating floors, sectors, parking spot numbers, etc., which would not be relevant to the actual parking location of the vehicle 30.

Accordingly, by detecting specific parking-related event(s) such as an initiation of a manoeuvre to park the vehicle, the controller 14 can obtain location information that is relevant to the user, for example by obtaining location information captured about (i.e. approximately at) the same time (or after) the initiation of the manoeuvre is detected.

In some examples, if the parking-related event that is detected by the detection module 12 is the vehicle entering in the parking area, the controller 14 may obtain location information on a sequence of parking-related events, for example, a change of elevation indicating a new floor is reached, a turn (or any non-linear movement) indicating that the vehicle may have entered a specific sector or row, a reduction of speed indicating the vehicle may be approaching a selected parking location, the initiation of a parking manoeuvre, etc. As used herein, the non-linear movement is intended to cover any movement of the vehicle whilst the front wheels are turned away from a longitudinal axis of the vehicle. Such non-linear movement can be used as an indication that the vehicle entered a specific sector, or, for the case of a non-linear movement detected last before the ignition is turned off or the parking brake applied, that the vehicle is being aligned to be between the parallel lines delimiting the chosen parking spot.

At each of such parking-related event, the controller may try to obtain corresponding location information. For example, the controller may obtain location information identifying a floor, each time it is detected that the vehicle reaches a new floor.

Then, the controller may prioritise later-obtained location information, e.g. by discarding previously obtained location information. For example, each time the controller obtains location information identifying a new floor, previously obtained floor information may be discarded, so the notification only includes the last (and thus correct) floor information on which the vehicle is parked.

The controller may also prioritise later-obtained location information while still including earlier information in the notification, as this may help the user reach the location of the vehicle. For example, the notification may indicate that the vehicle appears to have switched from the 3^{rd} floor (previously obtained location information) to the 4^{th} floor (latest obtained location information), thus including both in the notification. Although the example provided here refers to floor information, it would be understood that the same may be applied to information identifying a row/sector information, and/or to information identifying parking spots. The user may therefore trace back, floor-by-floor, sector-by-sector, row-by-row, etc., the trajectory that was taken to park the vehicle, and follow the same trajectory to find the parking location of the vehicle.

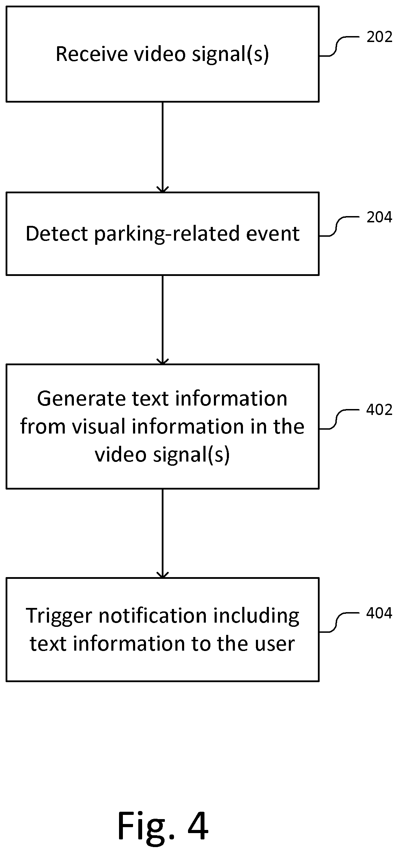

Referring now to Figure 4, processing operations performed by the device 10 in a second example implementation will be explained.

The process shown on Figure 4 starts with steps 202 and 204. The explanation for these steps is omitted here for brevity, as these have already been described above in connection with Figure 2.

Following step 204, at step 402, the controller 14 generates text information from the visual information in the video signal(s).

For example, the controller 14 may perform image and/or video processing on the received video signals, to recognise alphanumeric characters in the video (an example of visual information indicating a parking location), and may generate text information corresponding to the recognised alphanumeric characters.

Details of image and/or video processing allowing the detection and extraction of alphanumeric characters which would become apparent to the skilled person are omitted here for brevity.

In the example of Figures 3a-3d, the controller 14 may perform an optical character recognition to detect the sector name "A" and the parking spot name "1".

The controller 14 then generates a text including the text information.

For example, controller 14 may have a predetermined template, such as:
"You have parked your vehicle in sector [sector name], in spot [parking spot name], on [date-time]".

The controller 14 may then include into the template the text information detected from the video signals, to generate the text:
"You have parked your vehicle in sector **A,** in spot **1,** on **1 January 2024, at 13:00".** It would be understood that in some implementations, the text information generated may not be based on a template, and it need not include the date or time. In other implementations, the text information may include additional information such as information identifying the vehicle, etc.

Then, at step 404, the notification module 16 triggers a notification that includes the generated text information to the user. For example, this may be transmitted as an instant message to a user's account, which is accessible form a mobile device held by the user.

Accordingly, no visual data (e.g. video clip or image) needs to be transmitted to the user, thus reducing the requirements for transmitting and processing the notification on the mobile device, and the user not needing to review the video/image would understand the location information more conveniently.

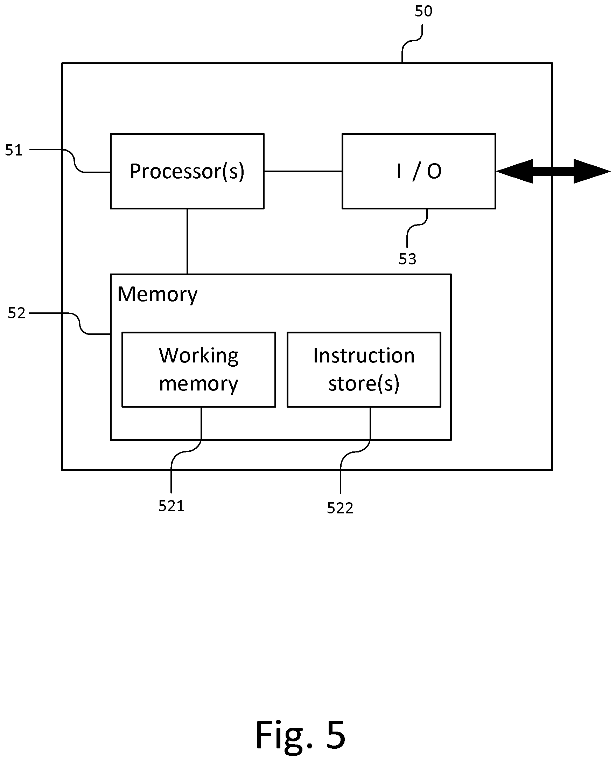

Referring now to Figure 5, an example of a processing device 50, e.g. a general kind of programmable processing apparatus, that may be used to implement the device 10 will be described.

The programmable processing device 50 comprises one or more processors 51, one or more interfaces (or input/output communication modules) 53, and memory 52 comprising one or more working memories 521, and one or more instruction stores 522 storing computer-readable instructions which can be executed by the one or more processors 51 to perform the processing operations as described herein.

An instruction store 522 is a non-transitory storage medium, which may comprise a non-volatile memory, for example in the form of a read-only-memory (ROM), a flash memory, a magnetic computer storage device (for example a hard disk) or an optical disk, which is pre-loaded with the computer-readable instructions. Alternatively, an instruction store 522 may comprise writeable memory, such as random access memory (RAM) and the computer-readable instructions can be input thereto from a computer program product, such as a non-transitory computer-readable storage medium (for example an optical disk such as a CD-ROM, DVD-ROM, etc.) or a computer-readable signal carrying the computer-readable instructions. The combination of hardware components shown in Figure 5 and computer-readable instructions are configured to implement the functionality of the device 10.

For example, the detection module 12 and the controller 14 may be implemented at least in part by the processor(s) 51 executing instructions from the instruction store 522 and the notification module 16 may be implemented at least in part by the interface(s) 53.

In the description herein, operations caused when a processor 51 executes instructions stored in an instruction store 522 is described herein generally as operations performed by the device 10, or components of the device 10 (e.g. "the device 10 determines ...", "the detection module 12 detects ...", "the controller 14 generates...", etc.).

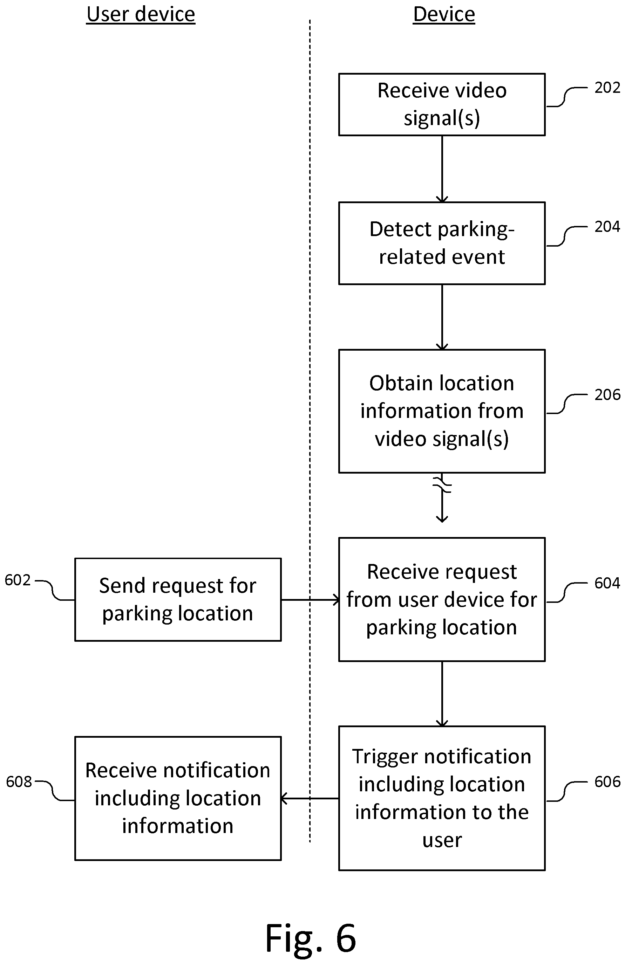

Referring now to Figure 6, processing operations performed by the device 10 and a user device in a specific example implementation where the user may request location information will be explained.

In the process of Figure 6, the device 10 (on the right) and the user device (on the left) may communicate with each other via any suitable communication link when the user device is away from the vehicle (for example using a wireless communication link).

The process of Figure 6 begins with the sequence of steps 202, 204 and 206. These have been described with reference to Figure 2 above, and their description will be omitted here for brevity.

Following step 206, the vehicle may be parked, and the user may move away from the vehicle.

This would be understood to be a non-limiting example, as the user may transmit the request any time after the vehicle is parked. The request could be received concurrently with (or even before) the processing of step 206.

Then, the user may wish to obtain the parking location of the vehicle. The user may, using a user device, send, at step 602, a request for the parking location of the vehicle.

At step 604, the device 10 may receive the request from the user device.

Then, at step 606, the device 10 may trigger the notification including the location information to the user, and specifically cause the notification to be sent to the user device.

At step 608, the user device may receive the notification including the location information.

Thus, the user receives the notification only when needed.

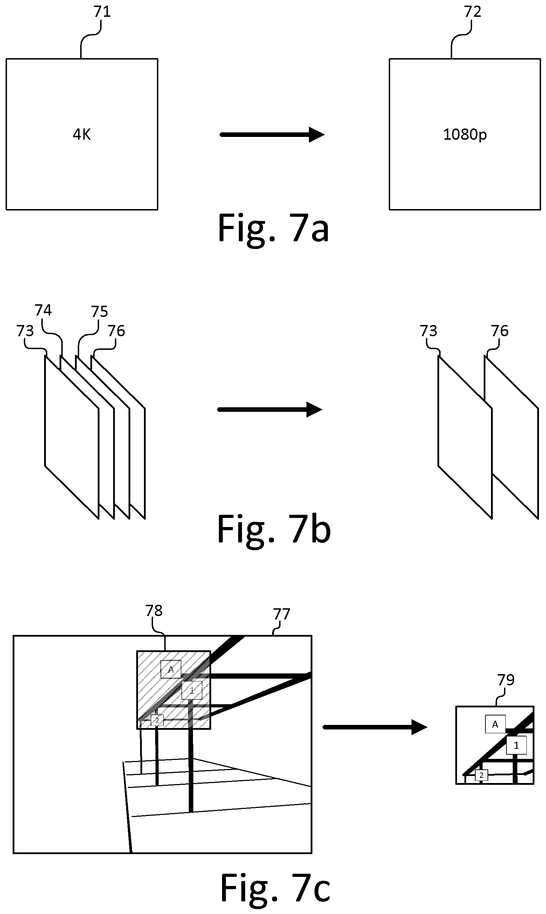

Referring now to Figures 7a, 7b and 7c, examples of image and/or video processing that may be performed by the controller 14 on the video signal(s) will now be explained.

In the example described with reference to Figure 2, the controller 14 leaves the video signal(s) substantially unchanged. However, in the example of Figure 7, the controller 14 is configured to reduce a size (in terms of data size required to store and/or transmit) of the video signal(s) to obtain visual data to be included in the notification (e.g. the short video clip and/or still images extracted from the video signal(s)).

As shown on Figure 7a, the controller 14 may reduce a resolution of a video signal. For example, a camera may be configured to capture image 71 with a high resolution (e.g. 4K). which may provide detailed visual information. Thus, the controller 14 may reduce the resolution and obtain a second image 72 with a smaller resolution (e.g. 1080p), in which the visual information indicating the parking location is still easily recognisable by the user (for example by ensuring a minimum pixel number for the height/width of characters or other symbols is met with the lower resolution).

As shown on Figure 7b, the controller 14 may reduce a frame rate, for example by discarding a number of intermediate frames. For example, a video signal may initially have a series of consecutive frames 73, 74, 75 and 76, and the controller 14 may discard the intermediate frames 74 and 75, and only keep frames 73 and 76 to be included in the notification.

More generally, the controller 14 may keep every M^{th} frame of a video signal, where M is an integer value equal to or greater than two. For example, assuming that a video signal includes a frame with an index i, the controller 14 may keep the frames i, i+M, i+2M, etc. and discard intermediate frames i+1, i+2, i+M-1, i+M+1, i+M+2, etc. Only the frames that are kept may be included in the notification. As cameras have a high capturing rate (usually 30 per seconds or more), the same visual information is very likely to occur on a series of consecutive frames. Thus, even when reducing the frame rate, it is likely that at least one frame with that visual information would be in the notification sent to the user, thus avoiding any loss of visual information.

As shown on Figure 7c, the controller 14 may extract a portion of each image corresponding to the visual information. Specifically, the controller 14 may detect that, in an image 77 of the video signal, the visual information indicating the location is present in a portion 78 of the image. The controller 14 may thus discard data from the image 77 that does not correspond to the portion 78, thus obtaining a smaller image 79 corresponding to the portion, and the notification may include only the smaller image 79.

Details that would now become apparent to the skilled person regarding the determination of the portion of interest (as including the visual information) in a series of images will be omitted here, for brevity.

The controller 14 may be configured to perform any of these processes, or any combination of these processes. For example, the controller 14 may perform a video and/or image compression on the video signa(s), and as a result of the compression, obtain video data that has a lower frame rate and/or lower resolution. The controller 14 may then extract the portion from the compressed video/image.

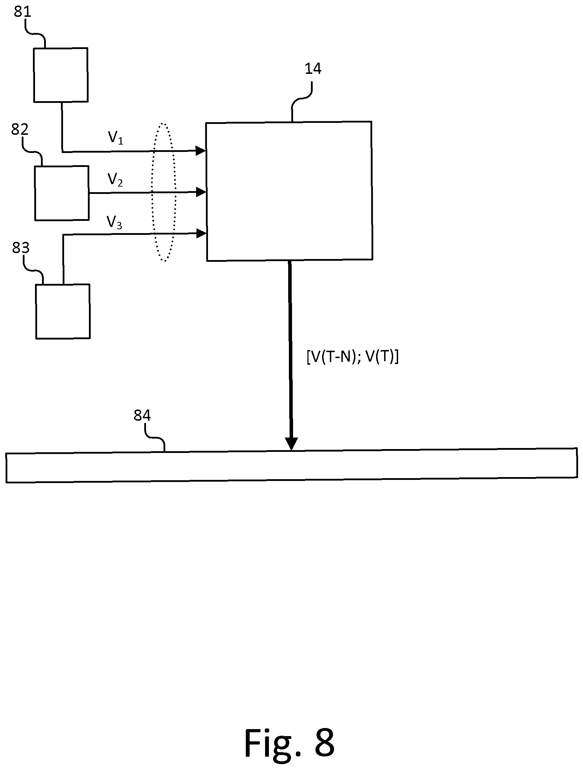

Referring now to Figure 8, a detailed example of the controller 14 storing video data for the video signal(s) will now be explained.

In the example shown on Figure 8, the controller 14 obtains three video signals V1, V2 and V3 from three cameras 81, 82 and 83, respectively. The controller 14 then stores video signal V from the video signals V1, V2 and V3 corresponding to at least a most recent time period, i.e. the time period up until the latest time instant captured by the cameras and obtained by the controller 14, in a memory location 84.

In some cases, the controller 14 may process each received video signal V1, V2 and V3, and only store the video signals in which any location information is detected. For example, if only the video signal V1 is found to include any visual information, signals V2 and V3 for the received time period may be discarded without being stored and/or notified to the user.

In some cases, the controller 14 may also be configured to store only portions of the video signals in which the location information is detected (e.g. only the frames including visual information, and/or only the portion of frames including visual information).

On Figure 8, the controller 14 stores video data corresponding to the time period T-N to T, where T is the latest time instant for which video signals is received. In other words, the controller 14 stores video data [V(T-N); V(T)], corresponding to the most recent period of time T-N to T.

Accordingly, the stored video data can be used to transmit visual information to the user later on, if necessary.

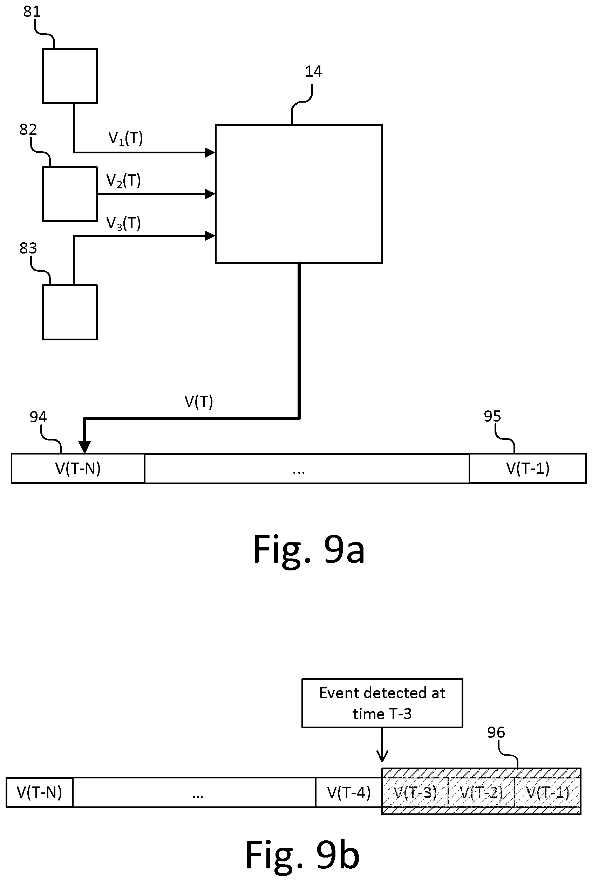

Referring now to Figure 9a, another detailed example of the controller 14 storing the video data will now be explained.

As with the example of Figure 8, the controller 14 receives video signals V1, V2 and V3 from three cameras 81, 82 and 83, respectively. The controller 14 may have a limited space allocated in memory to store the video data. In the example shown on Figure 9, the entire memory space is occupied by video data, from those corresponding to an earliest time period (i.e. the oldest stored video signal), V(T-N) at memory location 94, to the most recent time period, V(T-1), at memory location 95.

Thus, when the controller 14 receives new video signals (e.g. video signals corresponding to a new time instant or a new segment of time), the controller 14 determines that the stored video data for an earlier time period should be overwritten with the video data for the new video signals.

In the example of Figure 9b, the controller 14 determines that the video data V(T) for the new video signals should be stored in the memory location 94, which corresponds to the video data for the earliest time period. The controller 14 therefore overwrites the video data stored earlier, with the new video data.

Referring now to Figure 9b, a detailed example of the controller 14 protecting stored video data will be explained.

When operating as shown on Figure 9a, the stored video data is continuously updated with newer video data, erasing earlier stored data. However, in case a parking-related event is detected, the stored video data may be necessary later on to obtain the location information.

Accordingly, the controller 14 may be configured to protect stored video data from being erased or overwritten.

In the example shown on Figure 9b, a detected parking-related event is deemed to have occurred at a time corresponding to the time period T-3. Thus, the video data for the time period T-3 and the video data for any subsequent time period (T-2 and T-1) is protected, as shown by the hatching 96. If the controller 14 receive any newer video data to be stored, it will store it in a non-protected memory location.

Details of protecting memory from erasure which will now become apparent to the skilled person will be omitted here for brevity.

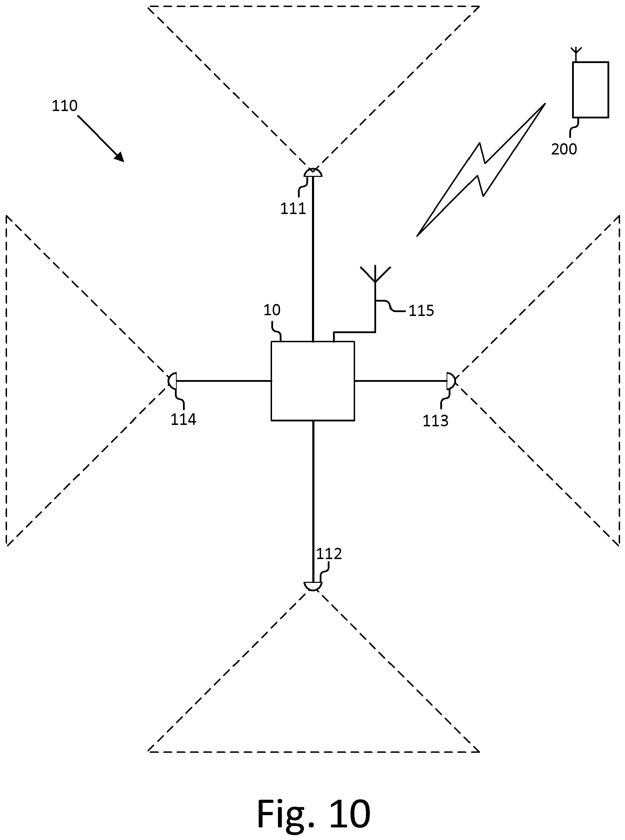

Referring now to Figure 10, an example of a system according to example embodiments will be described.

The system 110 may comprise the device 10, and four cameras 111, 112, 113 and 114. When in use, the device 10 and the four cameras may each be mounted on the vehicle. For example, the camera 111 may be mounted so as to face substantially the environment in front of the vehicle (e.g. above the front bumper of the vehicle or towards the top of the front windscreen), the camera 112 may be mounted so as to face substantially the environment in the back of the vehicle (e.g. placed on the back windscreen), whereas cameras 113 and 114 may be placed on opposite sides of the vehicle.

The device 10 receives video signal(s) from the cameras 111 to 114, detects a parking-related event, obtains location information from the video signal(s), and triggers a notification to the user including the location information, as explained herein.

In the example of figure 10, the device 10 is coupled to transmission means (e.g. antenna) 115, which is in communication (e.g. radio communication) with a user device 200. The device 10 triggering the notification causes the transmission means 115 to transmit the notification to the user device 200.

In some implementations, the communication link may be bidirectional, i.e. the transmission means 115 may also include receiving means, for example to receive from the user device 200 a request for a parking location, for example as described with reference to Figure 6 above.

### Modifications and Variations

Many modifications and variations can be made to the example embodiments described above.

For example, it would be understood that the steps of the processing described above need not be performed in the given order.

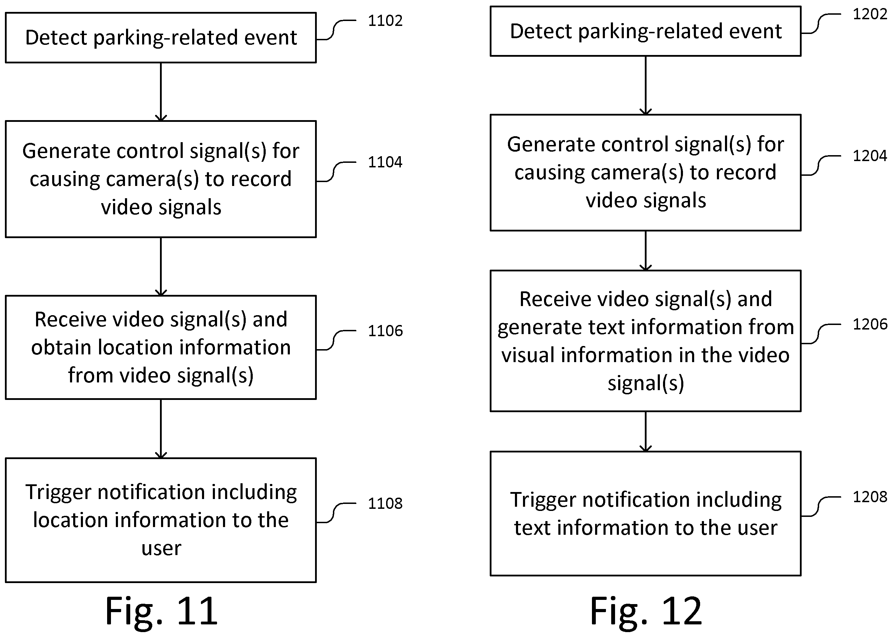

In particular, referring now to Figure 11, processing operations performed by the device 10 in a third example implementation will now be explained, where the parking-related event is detected before the camera(s) record a video.

At step 1102, the detection module 12 detects a parking-related event.

For example, the parking-related event may be detected based on data provided by a navigation (e.g. GPS) system of the vehicle or on the user's mobile device, which may indicate that a vehicle has entered a geographic area for parking, data provided by vehicle sensors such as one or more gyro sensors of the vehicle, an odometry system of the vehicle, etc., indicating that a manoeuvre for parking the vehicle has started, etc. In particular, the detection module may detect the parking-related event without obtaining any video signals from the at least one camera.

At step 1104, the controller 14 generates, upon detection of the parking-related event, one or more control signals for causing the at least one camera to record the one or more video signals.

For example, the controller 14 may generate signals that cause each camera to start recording. In some cases, these signals (e.g. control signals) may cause each camera to turn on first (or switch from a stand-by mode to an active mode) before recording.

At step 1106, the controller 14 receives the one or more video signal(s) and obtains the location information. The process in step 1106 is the same as step 206 on Figure 2 above.

Then, at step 1108, the notification module 16 triggers the notification including the location information, using the same process as step 208 on Figure 2 above.

Referring now to Figure 12, processing operations performed by the device 10 in a fourth example implementation will now be explained. Figure 12 combines the modifications shown on Figure 4 and those on Figure 11 above.

As shown on Figure 12, the device 10 detects at step 1202 a parking-related event, and generates at step 1204 control signal(s) for causing the camera(s) to record video signal(s). The process of steps 1202 and 1204 correspond to those of steps 1102 and 1104, respectively.

Then, at step 1206, the controller 14 may receive video signal(s) and generate text information, using the same process as step 402 of Figure 4 above.

Then, at step 1208, the notification module 16 may trigger a notification including the text information, using the same process as step 404 of Figure 4 above.

Although in the example of Figure 2, the processing is to identify the visual information and generate a video clip including the visual information, it would be understood that many other type of processing may be performed instead or in addition, as will be explained in more details below. In other examples, the controller 14 may not perform any processing on the obtained video signals and simply cause them to be provided to the user with the notification.

In the example described in connection with Figure 2 above, the notification includes visual data in a video format (i.e. the video clip). However, it would be understood that the visual data may be provided, in addition to the video format or alternatively thereto, in another format, for example as one or more still images obtained based on the video signal(s).

Figure 6 shows an example where the communication between the device 10 and the user device is performed as part of the process of Figure 2. However, it would be understood that receiving the request for parking location and transmitting the notification upon receipt of a request from the user may instead be integrated into the process shown with reference to Figure 4, or their modifications and variations explained herein (such as Figure 11 or 12).

As described with reference to Figures 2 and 4, some implementation may not require any request from the user device, as the device 10 may be configured to trigger the notification without any prompt from the user at all.

The operations of the controller 14 described with reference to Figures 7a to 7c are purely optional, as the controller 14 may transmit the video signals to the user substantially without processing and/or altering them at all.

The number of cameras shown on Figure 3a-3d, 8, 9a, 9b are purely illustrative, as the controller 14 may receive video signal(s) from any number of cameras. Similarly, the system 110 shown on Figure 10 may include only one camera, or any other number of cameras. Each camera may be placed facing any desired direction away from the vehicle.

The video data need not be stored in a single or continuous physical/logical memory location, but may be divided across different locations, for example different physical locations that are associated with each other as a logical memory location or stored in different logical locations of the memory.

The operations of the controller 14 described with reference to Figures 8 and 9 are purely optional. Specifically, the controller 14 need not store the video data at all or as described with reference to Figure 8 and/or 9, and instead it may transmit the visual information (or the text information) obtained from the video signals without storing any in memory. It would be understood that the controller 14 ay need to momentarily store parts of the video signals (e.g. in a cache or RAM) for the purpose of transmitting the video data, but this is not a permanent storage of the video data. Accordingly, the controller 14 not storing video data can be understood in some cases to mean not storing in a permanent and/or non-volatile memory.

The operations of the controller 14 described with reference to Figure 8 could be performed only when a parking-related event is detected. Thus, before detection, no storage of video data would occur.

It would be understood that the controller 14 need not overwrite the earliest time period as shown on Figure 9. Instead, the controller 14 may determine any other time period as suitable to be overwritten. For example, the controller 14 may determine that the video data for any time period older than a predetermined threshold, e.g. older than 5 minutes, can be overwritten with newer video data.

It would be understood that in some implementations, the system 110 may comprise the transmission means 115 as well.

### List of reference signs

10: device
12: detection module
14: controller
16: notification module
30: vehicle
301: vehicle movement direction
32, 81-83, 111-114: camera
321: camera's field of view
34: sign identifying sector
36: sign identifying parking spot
38: parking spots
50: processing device
51: processor(s)
52: memory
521: working memory
522: instruction store
53: interface
71: higher (pre-processing) resolution image
72: lower (post-processing) resolution image
73-76: series of frames in video signal(s)
77: image in video signal
78: portion corresponding to visual information
79: extracted portion of image
84, 94-95: memory locations for video data
96: protected memory locations
110: system
115: transmission means
200: user device

## Claims

1. A device for indicating a parking location of a vehicle, comprising:
a detection module configured to detect an occurrence of a parking-related event for the vehicle;
a controller configured to obtain, from one or more video signals provided by at least one camera coupled to the vehicle, location information that indicates a parking location of the vehicle; and
a notification module configured to trigger a notification to a user, upon the detection of the parking-related event, the notification including the location information.

2. The device according to claim 1, wherein
the controller is configured to process the one or more video signals to detect visual information showing a location,
wherein the notification indicates the location shown by the visual information.

3. The device according to claim 2, wherein the notification includes visual data comprising the visual information,
the visual data is based on a number of images from the one or more video signals captured over a time period corresponding to the parking-related event,
wherein, preferably, the number of images are captured over a time period having at most a predetermined duration, the predetermined duration being preferably one minute, and more preferably thirty seconds.

4. The device according to claim 2 or 3, wherein the controller is configured to obtain the visual data by reducing a size of the one or more video signals,
wherein, preferably, the controller is configured to reduce the size of the one or more video signals by performing at least one of: compressing the one or more video signals, reducing a resolution of frames of the one or more video signals, reducing a frame rate of the one or more video signals, and extracting a portion of each image comprising the visual information.

5. The device according to any of claim 2 to 4, wherein the controller is configured to generate text information from the visual information, and the notification includes the text information,
wherein, preferably, the notification module is configured to transmit the text information to the user in a text-based format.

6. The device according to any of claims 1 to 5, wherein the notification module is configured to trigger the notification to the user upon reception of a request from the user for the parking location of the vehicle.

7. The device according to any of claims 1 to 6, wherein the controller is configured to generate, upon detection of the parking-related event, one or more control signals for causing the at least one camera to record the one or more video signals.

8. The device according to any of claims 1 to 7, wherein the controller is configured to store video data from the one or more video signals corresponding to at least a most recent time period.

9. The device according to claim 8, wherein the controller is configured to overwrite stored video data corresponding to an earlier time period with new video data from the one or more video signals corresponding to a more recent time period, and
wherein the controller is configured to protect, upon detection of a parking-related event, stored video data captured at a time at which the parking-related event is deemed to have occurred or after.

10. The device according to claim 8, wherein the controller is configured to store the video data upon detection of the parking-related event.

11. The device according to any of claims 1 to 10, wherein the parking-related event indicates that a vehicle has been parked, that a manoeuvre to park the vehicle has initiated, or that the vehicle entered a parking area.

12. The device according to any of claims 1 to 11, wherein
the detection module is configured to detect a sequence of parking-related events, each occurring at a corresponding timing,
the controller is configured to obtain, for at least a subset of the sequence of parking-related events, location information based on images from the one or more video signals captured around the corresponding timing, and
preferably, the controller is configured to prioritise location information obtained for parking-related event occurring later in the sequence when determining the location information to be included in the notification.

13. The device according to any of claims 1 to 12, wherein the at least one video signals include images showing images captured in a visible wavelength, preferably as RGB images.

14. A method for indicating a location of a parked vehicle, comprising:
detecting an occurrence of a parking-related event for the vehicle;
obtaining, from one or more video signals that are provided by at least one camera coupled to the vehicle, location information that indicates a parking location of the vehicle; and
triggering a notification to a user, upon detection of the parking-related event, the notification including the location information.

15. A computer program comprising instructions which, when executed by at least one processor, cause the at least one processor to perform a method as set out in claim 14.
